# EUROPEAN PATENT APPLICATION

(11) **EP 2 113 674 A1**
(43) Date of publication of application: **04.11.2009**
(21) Application number: 09159172.7
(22) Date of filing: 30.04.2009
(51) Int. Cl.: F16B 7/14, A45B 9/00, A63C 11/22

(54) **Expandable device for a telescopic rod**

(30) Priority: 01.05.2008 TW 97116074
(71) Applicant: Fuko Inc, Taichung (TW)
(72) Inventor: Lai, Hsin-Yuan, Taichung, Taiwan (TW)
(74) Representative: Fleuchaus, Michael A.

(57) **Abstract**

An expandable device (200) for a telescopic rod (100), which has outer and inner tubes (110, 120), includes a tube-connecting portion (11) fixed to one end of the inner tube (120), a threaded drive shaft (12) fixed to the tube-connecting portion (11) and extending into the outer tube (110), and a fixed conical member (13) fixed to the threaded drive shaft (12) and tapering in a direction away from the tube-connecting portion (11), a movable conical member (20) connected threadedly and movably to the threaded drive shaft (12) and tapering in a direction toward the tube-connecting portion (11), and an expandable tube (30) disposed within the outer tube (110), surrounding the threaded drive shaft (12), and having a first end (31) proximate to the tube-connecting portion (11), an opposite second end (32), and an axial hole (33) having first and second tapered hole sections (331, 332) respectively adjacent to the first and second ends (31, 32). The fixed and movable conical members (13, 20) are received movably and respectively in the first and second tapered hole sections (331, 332). The movable conical member (20) is driven by the drive shaft (12) to move toward or away from the fixed conical member (13).

## Description

This invention relates to an expandable device, more particularly to an expandable device for a telescopic rod.

Referring to Fig. 1, a conventional telescopic rod, as disclosed in Chinese Patent No. 03803006.3, comprises an outer tube 1, an inner tube 2 inserted into the outer tube 1, and an expandable device 3 including a fixed member 4 fixed to one end of the inner tube 2, a threaded shaft 5 fixed to the fixed member 4, a tubular member 6 connected threadedly to the threaded shaft 5, and an expandable tube 7 sleeved on the tubular member 6. The tubular member 6 has a tapered face portion 601, and two wing plates 602 projecting outwardly and oppositely from the tapered face portion 601. The expandable tube 7 has a tapered hole portion 701 sleeved on the tapered face portion 601, and two grooves 702 to receive respectively the wing plates 602. When the outer and inner tubes 1, 2 are rotated relative to each other, through the connection of the tubular member 6 with the expandable tube 7 via the wing plates 602, and through the axial movement of the tubular member 6 along the threaded shaft 5, the expandable tube 7 is expanded by the tubular member 6 so as to abut fittingly against the outer tube 1, thereby securing together the outer and inner tubes 1, 2.

Although the aforementioned conventional telescopic rod can achieve its intended purpose, since the expandable tube 7 is expanded only by the tubular member 6, not only is the speed of operation slow, but an expanding range of the expandable tube 7 is also limited. Hence, the outer and inner tubes 1, 2 are unable to be tightly secured to each other.

Referring to Fig. 2, another conventional telescopic rod, as disclosed in U.S. Patent Application Publication No. 2006/0204322A1, is developed to resolve the aforementioned drawback, and comprises an outer tube 1', an inner tube 2' inserted into the outer tube 1', and an expandable device 3' including a tube-connecting portion 4' fixed to one end of the inner tube 2', a threaded shaft 5' fixed to the tube-connecting portion 4', a fixed conical member 6' fixed to the threaded shaft 5', a movable conical member 8' connected threadedly and movably to the threaded shaft 5', and an expandable tube 7' disposed around the fixed and movable conical members 6', 8'. When the inner and outer tubes 2', 1' are rotated relative to each other, the movable conical member 8' moves toward the fixed conical member 6', and the fixed and movable conical members 6' , 8' respectively and simultaneously expand two sides 701', 702' of the expandable tube 7' until the expandable tube 7' abuts fittingly against the outer tube 1', thereby restricting movement of the outer and inner tubes 1', 2' relative to each other. However, as there is no limiting means to limit outward movement of the fixed and movable conical members 6', 8', the fixed and/or movable conical members 6', 8' can undesirably move away from the expandable tube 7' , thereby lowering the speed of expanding the expandable tube 7'.

Therefore, the object of the present invention is to provide an expandable device for a telescopic rod which has a robust structure and which can operate quickly to expand or retract an expandable tube thereof.

According to this invention, an expandable device for a telescopic rod, which has outer and inner tubes, includes a drive element, a movable conical member, and an expandable tube. The drive element includes a tube-connecting portion adapted to be fixed to one end of the inner tube, a threaded drive shaft having one end fixed to the tube-connecting portion and adapted to extend into the outer tube along an axial line, and a fixed conical member fixed to the threaded drive shaft and tapering in a direction away from the tube-connecting portion. The movable conical member is connected threadedly and movably to the threaded drive shaft, and tapers in a direction toward the tube-connecting portion.
The expandable tube is adapted to be disposed within the outer tube, surrounds the threaded drive shaft, and has a first end proximate to the tube-connecting portion, a second end opposite to the first end, a surrounding wall between the first and second ends, and an axial hole extending through the first and second ends. The axial hole has a first tapered hole section adjacent to the first end, and a second tapered hole section adjacent to the second end. The fixed conical member is received movably in the first tapered hole section.
The movable conical member is received movably in the second tapered hole section, and is driven by the drive shaft to move toward or away from the fixed conical member.

Other features and advantages of the present invention will become apparent in the following detailed description of the preferred embodiment of the invention, with reference to the accompanying drawings, in which:

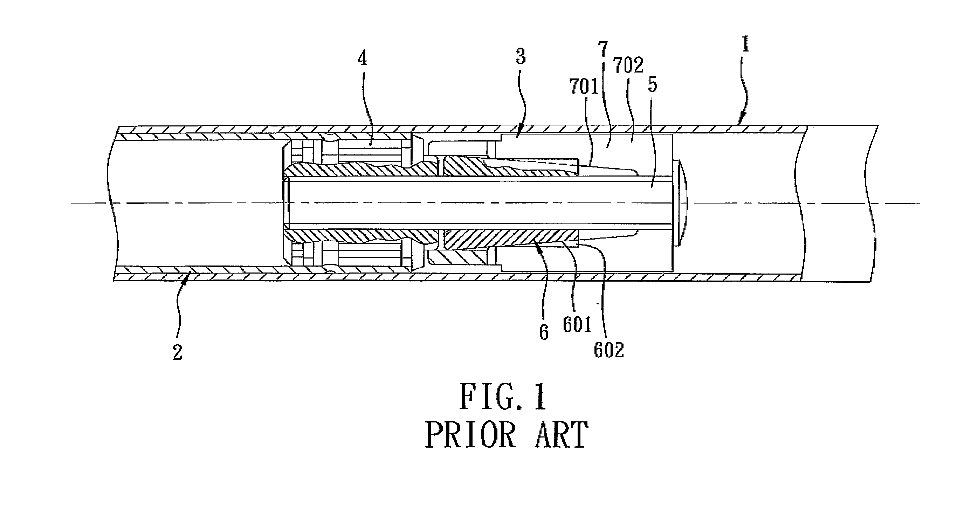

Fig. 1 is a fragmentary sectional view of a conventional telescopic rod disclosed in Chinese Patent No. 03803006.3;

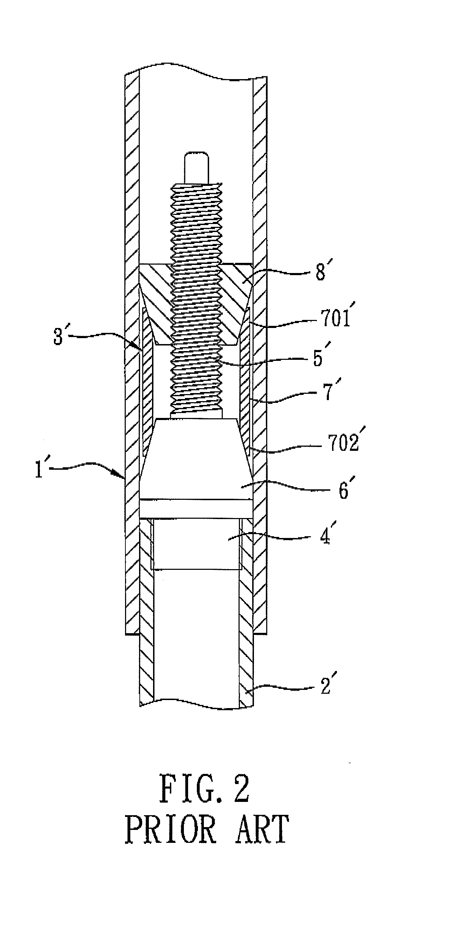

Fig. 2 is a fragmentary sectional view of a conventional telescopic rod disclosed in U.S. Patent Application Publication No. 2006/0204322A1;
Fig. 3 is an exploded perspective view of an expandable device for a telescopic rod according to the preferred embodiment of this invention;
Fig. 4 is a fragmentary sectional view of the preferred embodiment in an assembled state;
Fig. 5 is an enlarged sectional view of the preferred embodiment taken along line V-V of Fig. 4; and
Fig. 6 is a view similar to Fig. 4, but illustrating an expandable tube in an expanded state.

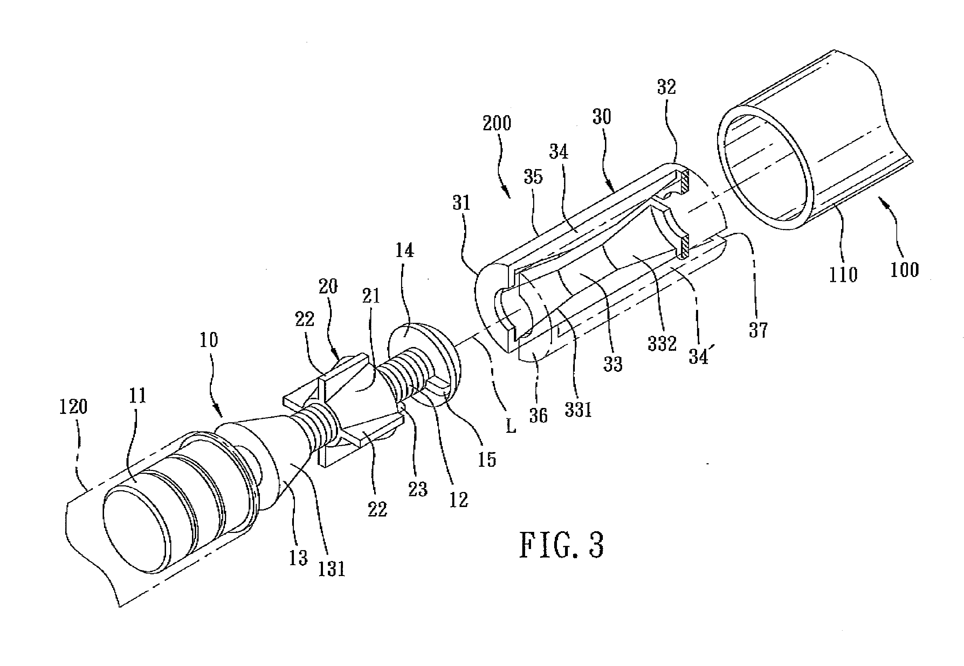

Referring to Figs. 3 to 6, an expandable device 200 for a telescopic rod 100 according to the preferred embodiment of the present invention is shown to comprise a drive element 10, a movable conical member 20, and an expandable tube 30. The telescopic rod 100 has an outer tube 110, and an inner tube 120 inserted into the outer tube 110 along an axial line (L).

The drive element 10 has a tube-connecting portion 11 adapted to be fixed to one end of the inner tube 120, a threaded drive shaft 12 having one end fixed to the tube-connecting portion 11 and adapted to extend into the outer tube 110 along the axial line (L), a fixed conical member 13 fixed to the threaded drive shaft 12 and having an outer surface 131 tapering in a direction away from the tube-connecting portion 11, a block portion 14 fixed to the other end of the threaded drive shaft 12 and opposite to the tube-connecting portion 11, and a projection 15 projecting from the block portion 14 toward the fixed conical member 13.

The movable conical member 20 is connected threadedly and movably to the threaded drive shaft 12, is disposed between the fixed conical member 13 and the block portion 14, and has an outer surface 21, two pairs of wing plates 22 projecting outwardly and radially from the outer surface 21, and a metallic stud 23 projecting axially from an end of the movable conical member 20 toward the block portion 14 and abuttable against the projection 15. The outer surface 21 tapers in a direction toward the tube-connecting portion 11. Hence, the outer surface 21 and the outer surface 131 taper in directions opposite to each other.

The expandable tube 30 is adapted to be disposed within the outer tube 110, and has a first end 31 proximate to the tube-connecting portion 11, a second end 32 opposite to the first end 31 along the axial line (L), a surrounding wall 35 between the first and second ends 31, 32, an axial hole 33 extending through the first and second ends 31, 32, and two pairs of axially extending grooves 34, 34' formed in the surrounding wall 35 and communicated with the axial hole 33. The axial hole 33 has a first tapered hole section 331 adj acent to the first end 31, and a second tapered hole section 332 adjacent to the second end 32. The fixed conical member 13 is received movably in the first tapered hole section 331. The movable conical member 20 is received movably in the second tapered hole section 332. One pair of the axially extending grooves 34 opens at the first end 31, and receives one pair of the wing plates 22. The other pair of the axially extending grooves 34' opens at the second end 32, and receives the other pair of the wing plates 22.

The expandable tube 30 further has a first retaining flange 36 projecting inwardly from the first end 31 to prevent the fixed conical member 13 from moving out of the expandable tube 30, and a second retaining flange 37 projecting inwardly from the second end 32 to prevent the movable conical member 20 from moving out of the expandable tube 30.

Through the opposite opening directions of the two pairs of the axially extending grooves 34, 34', the first and second ends 31, 32 of the expandable tube 30 can be expanded radially so as to permit insertion of the fixed and movable conical members 13, 20 into the first and second tapered hole sections 331, 332, respectively, and to permit insertion of the pairs of wing plates 22 into the respective pairs of axially extending grooves 34.

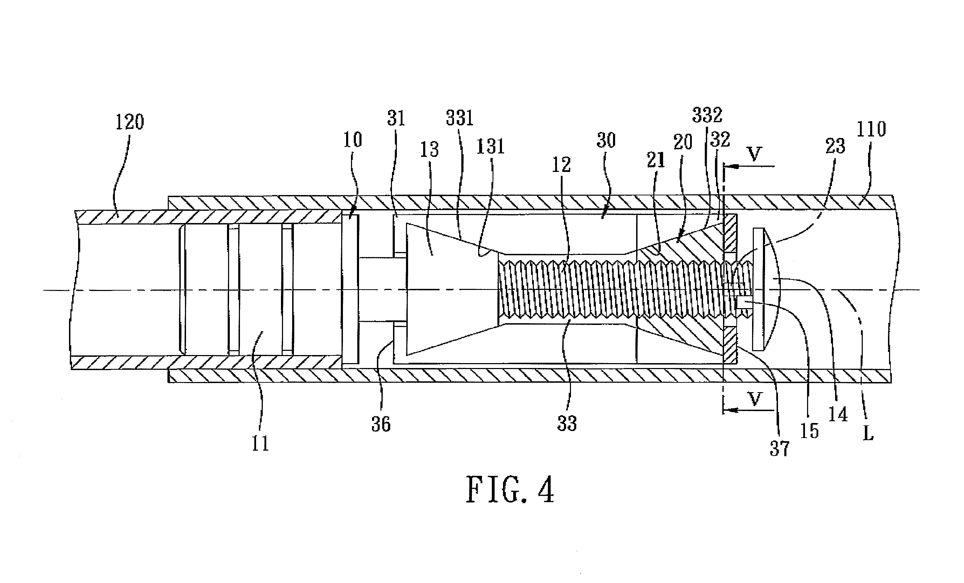

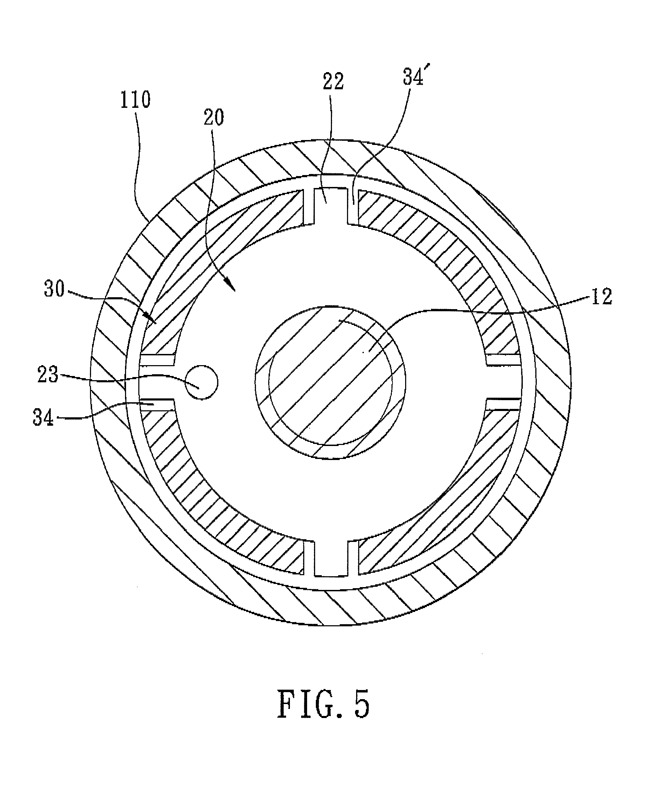

With reference to Figs. 4 and 5, when the movable conical member 20 is driven by the drive shaft 12 to move toward the block portion 14 along the axial line (L), as the stud 23 abuts against one side of the projection 15, the movable conical member 20 is limited from moving further. This prevents the second retaining flange 37 of the expandable tube 30 from contacting frictionally the block portion 14 and prevents the expandable tube 30 from being jammed at the block portion 14, thereby adversely affecting the next operation of the telescopic rod.

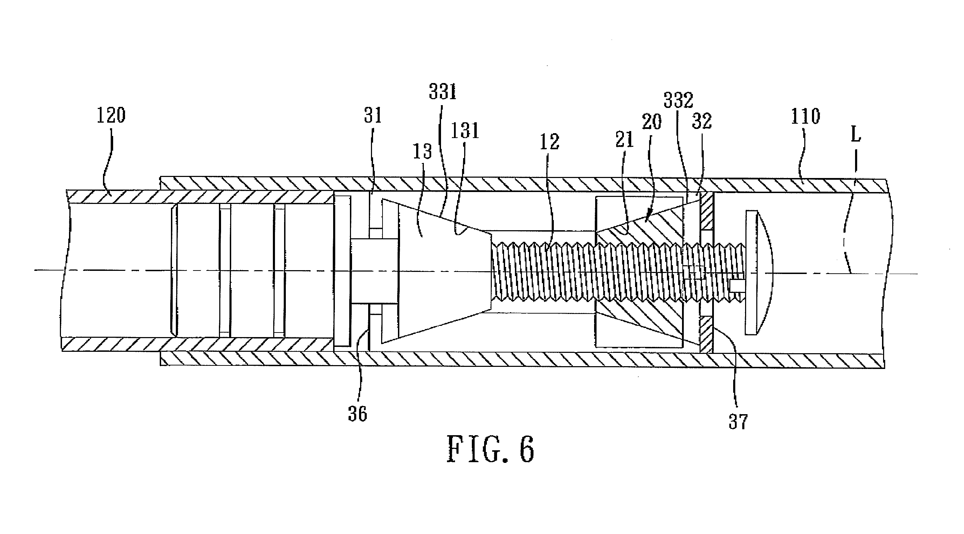

With reference to Fig. 6, when the outer and inner tubes 110, 120 are rotated relative to each other in a first direction, the drive shaft 12 activates the movable conical member 20 to move along the axial line (L) toward the fixed conical member 13. At this time, the outer surface 21 of the movable conical member 20 and the outer surface 131 of the fixed conical member 13 simultaneously push and expand radially the expandable tube 30 against the outer tube 110, thereby preventing relative movement between the inner and outer tubes 120, 110.

When the outer and inner tubes 110, 120 are rotated relative to each other in a second direction opposite to the first direction, the movable conical member 20 is activated to move away from the fixed conical member 13 so as to return to an original position shown in Fig. 4, so that the length of the inner tube 120 relative to the outer tube 110 can be adjusted.

From the aforementioned description of the expandable device 200 of the present invention, it is apparent that by fixing the fixed conical member 13 to one side of the drive shaft 12 and disposing the same movably in the first tapered hole section 331, by disposing the movable conical member 20 movably in the second tapered hole section 332, and by providing the first and second retaining flanges 36, 37 to limit movements of the fixed and movable conical members 13, 20, the fixed and movable conical members 13, 20 can be moved quickly toward or away from each other, so that the expandable tube 30 can expand or contract quickly. Therefore, the length of the telescopic rod can be adjusted quickly to a desired length.

Further, the expandable tube 30 surrounding entirely the fixed and movable conical members 13, 20 has a large engagement surface to contact and engage the outer tube 110, thereby providing an increased securing effect to the outer tube 110. Moreover, the drive shaft 12, the fixed conical member 13, and the tube-connecting portion 11 can be formed integrally into a unitary body. After the movable conical member 20 is connected threadedly to the drive shaft 12, the block portion 14 is connected integrally to the drive shaft 12. The structure arranged as such is robust. Additionally, the movable conical member 20 makes use of the metallic stud 23 to abut against the projection 15 so as to prevent further rotation of the movable conical member 20 relative to the drive shaft 12, thereby preventing frictional contact between the block portion 14 and the expandable tube 30 and jamming of the expandable tube 30. Hence, smooth operation of the telescopic rod can be ensured.

## Claims

1. An expandable device (200) for a telescopic rod (100), which has an outer tube (110) and an inner tube (120),
**characterized by**:
a drive element (10) including a tube-connecting portion (11) adapted to be fixed to one end of the inner tube (120), a threaded drive shaft (12) having one end fixed to said tube-connecting portion (11) and adapted to extend into the outer tube (110) along an axial line (L), and a fixed conical member (13) fixed to said threaded drive shaft (12) and tapering in a direction away from said tube-connecting portion (11);
a movable conical member (20) connected threadedly and movably to said threaded drive shaft (12) and tapering in a direction toward said tube-connecting portion (11); and
an expandable tube (30) adapted to be disposed within the outer tube (110), surrounding said threaded drive shaft (12), and having a first end (31) proximate to said tube-connecting portion (11), a second end (32) opposite to said first end (31), a surrounding wall (35) between said first and second ends (31, 32), and an axial hole (33) extending through said first and second ends (31, 32), said axial hole (33) having a first tapered hole section (331) adjacent to said first end (31), and a second tapered hole section (332) adjacent to said second end (32), said fixed conical member (13) being received movably in said first tapered hole section (331), said movable conical member (20) being received movably in said second tapered hole section (332) and being driven by said drive shaft (12) to move toward or away from said fixed conical member (13).

2. The expandable device (200) of Claim 1, wherein said expandable tube (30) has two pairs of axially extending grooves (34) provided in said surrounding wall (35) and communicated with said axial hole (33), said movable conical member (20) further having two pairs of wing plates (22) projecting outwardly and radially from an outer surface (21) of said movable conical member (20) and received respectively in said axially extending grooves (34).

3. The expandable device (200) of Claim 2, wherein said expandable tube (30) further has a first retaining flange (36) projecting inwardly from said first end (31), and a second retaining flange (37) projecting inwardly from said second end (32).

4. The expandable device (200) of Claim 3, wherein one pair of said axially extending grooves (34) opens at said first end (31), and the other pair of said axially extending grooves (34) opens at said second end (32).

5. The expandable device (200) of Claim 1, wherein said drive element (10) further includes a block portion (14) fixed to the other end of said drive shaft (12) and opposite to said tube-connecting portion (11).

6. The expandable device (200) of Claim 5, wherein said drive element (10) further includes a projection (15) projecting from said block portion (14) toward said movable conical member (20), and said movable conical member (20) further has a stud (23) that is abuttable against said projection (15).
